Europäisches Patentamt

European Patent Office

Office européen des brevets

(19)

(11) Publication number: **0 175 656**
**A2**

# (12) EUROPEAN PATENT APPLICATION

(21) Application number: **85830225.0**

(22) Date of filing: **09.09.85**

(51) Int. Cl.⁴: **H 04 L 5/14**

(30) Priority: **21.09.84 IT 2275784**

(43) Date of publication of application: **26.03.86**
**Bulletin 86/13**

(84) Designated Contracting States: **DE FR GB**

(71) Applicant: **ISTRUMENTI DI MISURA C.G.S. S.p.A., Via Marsala, 24, I-20052 Monza (Milan) (IT)**

(72) Inventor: **Fedrigo, Renzo, Via Iseo, 10, I-20052 Monza (Milan) (IT)**
Inventor: **Fere, Franco, Via San Giuseppe, 5, I-20092 Cinisello Balsamo (Milan) (IT)**

(74) Representative: **Vannini, Torquato et al, JACOBACCI-CASETTA & PERANI S.p.A. 7 Via Visconti di Modrone, I-20122 Milan (IT)**

(54) System for the two-way line transmission of electrical signals and an indicator instrument incorporating such a system.

(57) A monitoring unit supplied with a signal to be measured which can control the operation of actuator elements such as electro-mechanical relays, is connected through a single transmission line to a visual display unit for the presentation of the signal to be measured in visual form. The visual display unit has associated regulating elements which allow threshold values of the signal to be selected (for example minimum and maximum values) in correspondence with which it is wished to vary the operating conditions of the said relays. Indicator lights associated with an indicator module indicate the operating conditions of these actuator elements. The monitoring unit includes a power source which causes an electrical current flow in the transmission line, the average magnitude of which represents the value of the signal being measured. The visual display unit on the other hand includes a current meter which is sensitive to the current flowing in the transmission line and comparator elements, the switching threshold of which is at a level which can be selected by means of regulating members. When the signal being measured reaches one of these treshold levels, a voltage generator in the visual display unit applies a corresponding voltage to the transmission line. This voltage is detected by a voltage meter present in the monitoring unit. The voltage meter acts on a corresponding relay causing it to change its state. Furthermore, an auxiliary oscillator associated with the voltage meter passes a pulse signal into the transmission line through the current generator with an average value of zero, this pulsed signal being receveid by the visual display unit and activating the corresponding indicator light. The remote supply of the visual display unit is provided for by an alternating current signal with an average value of zero fed through the transmission line.

0175656

- 1 -

"System for the two-way line transmission of electrical
signals and an indicator instrument incorporating such
a system"

The present invention relates to systems for the two-way
transmission of electrical signals and relates
particularly to a system for the two-way transmission of
electrical signals between first and second units
connected by a single transmission line which can act
simultaneously to transmit and receive signals.

Transmission systems of the type specified above are in
current everyday use in various sectors of the art.
Typically, frequency or time domain multiplex schemes
are used for the simultaneous transmission of different
electrical signals on a single transmission line.
Numerous other alternative systems are also known, for
example, those using techniques which make use of
orthogonal signals and like techniques.

Such systems are generally very expensive, particularly
when sophisticated signal manipulation techniques are
used.

The object of the present invention is to provide a
system for the two-way simultaneous transmission of
electrical signals between two units interconnected by a
single transmission line, which is cheap to manufacture,
has a small bulk and is very reliable, that is to say,
which has properties such as to allow it to be used in
various sectors of the art.

According to the present invention, this object is
achieved by a system of the type specified above,
characterised in that:
- the first unit includes a current generator, which can
cause an electrical current to flow in the transmission
line of a magnitude indicative of the signals sent from the first unit to the second unit; the first unit further including a voltage meter sensitive to the voltage present on the transmission line, and

- the second unit includes a voltage generator which can apply an electrical voltage to the transmission line, the value of which is indicative of the signals sent from the second unit to the first unit; the second unit further including a current meter which is sensitive to the current flowing in the transmission line.

The invention also relates to an indicator instrument comprising:

- a monitoring unit which, in use, is supplied with a signal to be measured and which is able to control selectively the operation of at least one actuator element, and

- a visual display unit for presenting the signal being measured in a visual form, provided with regulating means for selecting at least one threshold level for the signal at which it is desired to vary the operating condition of the at least one actuator element.

Indicator instruments of the type specified above are in current use in the art: one thinks, for example, of so-called "thermostats" which allow remote control of the operation of a heating installation, causing burner ignition when the temperature of the water in a boiler falls below a predetermined threshold level and switching off the burner when the temperature of the water circulating in the installation. reaches a maximum safety level.

According to the present invention, an indicator instrument of the type specified above is provided which incorporates a system for the two-way transmission of electrical signals having the characteristics outlined above.

More specifically, the indicator instrument of the invention is characterised in that: '
- the monitoring unit and the visual display unit are connected together through a single transmission line,
- the monitoring unit includes a current generator which in use is supplied with the signal to be measured and causes an electrical current flow in the transmission line with at least one spectral component the magnitude of which is indicative of the values of the signal being measured; the monitoring units further including a voltage meter which, in use, can detect the value of the voltage present on the transmission line and can control selectively, in the prsence of a predetermined variation in the said voltage value a corresponding variation in the operating conditions of the at least one actuator element, and
- the visual display unit includes a current meter which is sensitive to the magnitude of the at least one spectral component of the current flowing in the transmission line; the visual display unit further including threshold comparator elements sensitive to the magnitude of the at least one spectral component the threshold switching levels of which are selectively determinable by regulating means and at least one voltage generator which is controlled by the threshold comparator elements and causes variations in the voltage present on the transmission line upon switching of the comparator elements.

By virtue of this characteristic, an indicator

- 4 -

instrument is provided which has a simple and reliable structure. The indicator instrument according to the invention is particularly suitable for use in control panels of electrical power installations. In this case the detector unit is mounted in the "power" part of the panel, that is to say, the part in which there are high voltage and current values. The visual display unit, however, is mounted in the part which is directly accessible by the operators and controllers. It is thus easy to select the threshold levels (for example maximum and minimum levels) of the signal to be measured at which it is desired to activate or deactivate the actuator elements without running risks of manipulation of parts subject to high currents or voltages.

In similar instruments of conventional type, the presetting of the threshold levels is normally effected by mechanical devices. In general one is dealing with extremely complex devices which require a considerable time for assembly, imposing a heavy burden on the final cost of the instrument, and affording very little advantage in relation to the performance provided. The overall precision of the instrument is also very low.

In the instrument according to the invention, the presetting of the threshold levels is, however, achieved essentially by means of electrical devices. In addition to being of lower cost, such devices allow a very high level of precision to be achieved.

The invention will now be described, purely by way of non-limiting example, with reference to the appended drawings, in which:

Figure 1 is a schematic illustration of the structure of an indicator instrument according to the invention,

Figure 2 is a block schematic diagram illustrating the construction of the elements of Figure 1 in greater detail,

Figures 3 and 4 illustrate typical changes in electrical signals present at various points in the instrument illustrated in Figures 1 and 2, and

Figure 5 is a schematic representation of a system for the two-way transmission of electrical signals according to the invention.

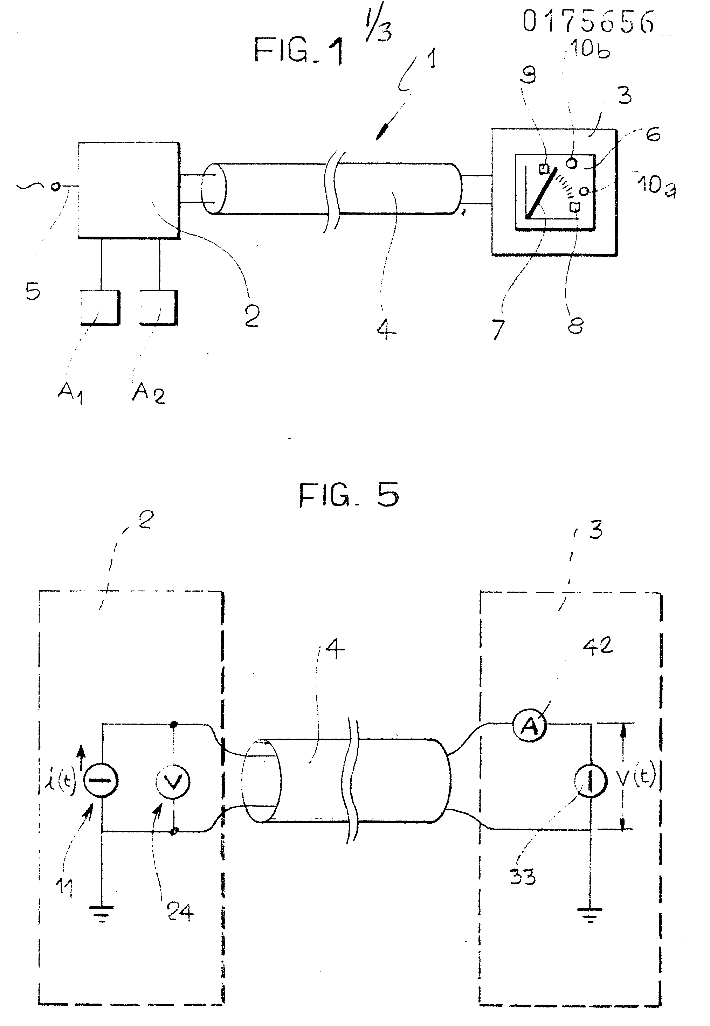

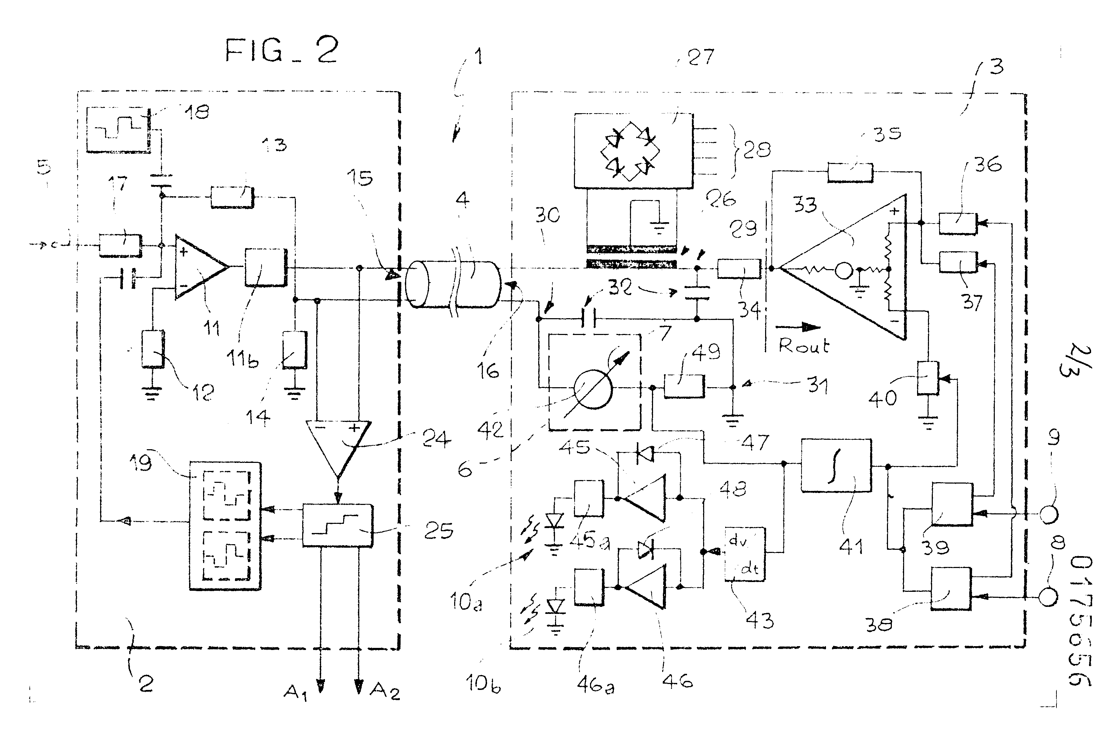

In Figures 1 and 2 an indicator instrument is generally indicated 1 which is intended to be mounted on a control panel of an electrical power installation , for example a plant for the distribution of electrical energy.

The instrument 1 is constituted essentially by a monitoring unit 2 intended to be mounted in the "power section" of the panel, that is to say the part in which high voltages and currents are present, and a visual display unit 3 intended to be mounted in the part of the panel directly accessible to controllers operating the panel.

The units 2, 3 are connected together by a single transmission line 4.

By the term "transmission line" in the present description and in the following claims is meant, in general, any structure which can fulfil the function of two-way transmission of current and voltage signals.

In practice, the transmission line could, for example be constituted by a telephone pair or a coaxial cable. The behaviour of the transmission line is in each case identified by the electrical current which flows in the line itself and by the voltage on the line.

In the typical configuration of use of the instrument 1, a signal to be measured is present at the input terminal 5 of the monitoring unit 2, which for simplicity is termed the "measurement signal", of which it is desired to provide a visual representation on an indicator module 6 with which the visual display unit 3 is provided.

The visual display unit 3 may to advantage be constituted by a meter for electrical magnitudes which is described in a patent application of even date filed by the same applicants.

The indicator module 6, which is gnerally constituted by a graduated quadrant scale over which an oscillating pointer 7 moves, has associated cursors which allow predetermined threshold levels of the measurement signal to be identified. In the embodiment illustrated there are two cursors 8, 9 which allow an operator to select a minimum threshold value and a maximum threshold value of the measurement signal.

The monitoring unit 2 is connected to two actuator elements indicated $A_1$ and $A_2$ which it is desired to activate or deactivate when the measurement signal reaches a respective threshold level.

For example, the measurement signal applied to the terminal 5 of the monitoring unit 2 may be constituted by a signal which indicates the temperature in an installation and the actuators $A_1$ and $A_2$ may be constituted by two relays which control respectively an electric fan for cooling the installation and a safety device which cuts out the operation of the installation.

In this case, the instrument 1 may be used to provide a continual visual indication of the temperature in the installation, operating the electric fan when the temperature rises above the minimum level selected by the cursor 8 and causing cut-out of the installation when the temperature accidentally reaches the maximum safety level determined by the cursor 9.

The indicator module 6 is also provided with two warning elements, for example indicator lights or LEDs 10a and 10b which are activated when the monitoring unit operates the actuators $A_1$, $A_2$. For example, with reference to the embodiment described above, the warning element 10a may be a yellow LED which is lit when the relay $A_1$ activates the electric fan while the warning element 10b may be a red LED which indicates the operation of the relay $A_2$ and the consequent cut-out of the installation when it reaches a dangerous temperature.

In the block schematic diagram of Figure 2, reference 11 indicates an operational amplifier arranged, by means of resistors 12 to 14, in a classic transconductance amplifier design, the load of which is constituted by a respective input terminal 15 of the transmission line 4.

In other words, the amplifier 11, the output of which is connected to a booster stage 11b, enables a current to be made to flow in the line 4, the magnitude of which is proportional to the signal level applied to the non-inverting input terminal of the amplifier itself.

To this input terminal are applied, superposed on one another:
- the measurement signal applied to the input terminal 5 through a scaling resistor 17 which may be adustable for calibration;
- an alternating signal with a zero average value generated by a first (supply) oscillator 18, and
- two pulsed signals having a zero average value, with opposite polarities from each other, generated by a further oscillator 19.

The measurement signal applied to the terminal 5 is a signal with slow temporal evolution, that is to say, a signal the frequency spectrum of which occupies a narrow range of frequencies about zero. For the purpose of an understanding of the operation of the instrument 1 it may thus be treated as in effect a D.C. signal.

The signal generated by the supply oscillator 18 is constituted by a square wave with an average value of zero with, for example, a frequency of the order of 2KHz.

The pulsed signals generated by the oscillator 19 are typically constituted by spikes having an average value of zero.

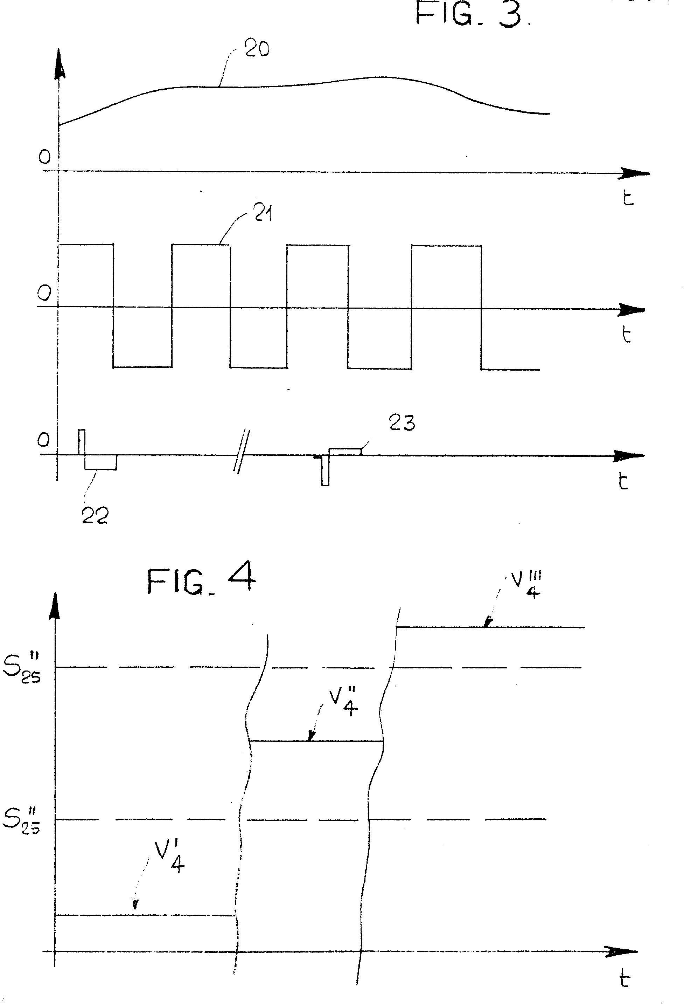

Since the said signals are supplied to the amplifier 11 superposed on each other, the current which the amplifier 11 and the booster 11b associated therewith feed into the line 4 results from the superposition of corresponding current components of which Figure 3 illustrates a possible time graph. A first component is a substantially D.C. component 20 - that is, of slow temporal evolution - which corresponds to the measurement signal. Superposed thereon is an alternating component 21 corresponding to the supply signal generated by the oscillator 18. When the oscillator 19 is actuated, two pulsed components 22, 23 corresponding to the spikes generated by the oscillator 19 are superposed alternately with each other on the aforesaid two components. Reasoning in terms of spectral analysis (and leaving aside the pulsed components 22, 23) the current flowing in the line 4 thus includes a "substantially continuous" spectral component which occupies the frequency range about the origin and the intensity of which is indicative of the value of the measurement signal 5 and an alternating

- 10 -

supply component at 2 KHz, that is to say, a spectral component occupying a "substantially discontinuous" frequency band of the frequency range occupied by the component corresponding to the measurement signal.

The relative amplitudes of the various components of the current flowing in the line 4 may be regulated by varying the output level of the signals of the oscillators 18 and 19 and by varying the resistor 17.

A differential circuit is indicated 24 which, for example, is constituted by an operational amplifier and associated feedback and supply circuits which detect the voltage present on the line 4. When the line 4 is constituted by a telephone pair, the two inputs of the circuit 24 are connected to the two conductors of the pair. When a coaxial cable is used, the two inputs are connected respectively to the inner conductor and to the screening sheath of the coaxial cable. The output signal of the differential circuit 24 is supplied to a comparator circuit 25 with several thresholds which controls the operation of the auxiliary oscillator 19 and the operation of the two actuators (relays) $A_1$ and $A_2$.

In the embodiment illustrated here, the element 25 is a comparator circuit with two superposed thresholds $S'_{25}$, $S''_{25}$ (Figure 4) which, for simplicity of explanation, will both be considered as positive.

- 11 -

When the level of the signal output by the differential circuit 24 (corresponding to the voltage present on the line 4) is below both thresholds $S'_{25}$, $S''_{25}$ (for example $V'_4$ in Figure 4) the relays $A_1$ and $A_2$ are both de-energised and the oscillator 19 is inactive. When the signal output by the circuit 24 passes the lower threshold $S'_{25}$ ($V''_4$ in Figure 4), the comparator circuit 25 energises the first relay $A_1$ causing the simultaneous emission of a spike (for example that corresponding to the signal 22) by the oscillator 19.

When the signal output by the circuit 24 passes the upper threshold level $S''_{25}$ ($V'''_4$ in Figure 4) the comparator circuit 25 also energises the second relay $A_2$ causing the oscillator 19 to emit a spike having the opposite polarity.

By way of summary, the circuits 24 and 25 together form a voltage meter which is sensitive to the level or voltage value present on the transmission line 4 and is able to control selectively, in the presence of a predetermined variation in the voltage value ($V'_4 \rightarrow V''_4$, $V''_4 \rightarrow V'''_4$), a corresponding change in the operating condition of the actuators $A_1$, $A_2$, and the simultaneous emission of one of the pulsed signals by the oscillator 19.

The visual display unit 3 connected to the other end 16 of the transmission line 4 includes a transformer 26 the

- 12 -

primary coil of which is connected electrically in series with one of the conductors of the line 4.

The secondary winding of the transformer 26 is connected to a rectifier circuit 27 from which supply lines 28 branch to various electrical components of the visual display unit 3.

Between the end of the primary winding of the transformer 26 opposite the end connected to one of the conductors of the line 4 (point 29 in the diagram of Figure 2) and the other conductor of the same line 4 (point 30 of the diagram of Figure 2) and an earth terminal (point 31 in the same diagram) there are respective capacitors 32 having capacitive values such as to provide minimum impedance to the alternating components 21 of the current flowing in the line 4.

In other words, the alternating component 21 of the current which is fed to the visual display unit 3 is "confined" to the transformer 26 through the capacitors 32, without propagating appreciably towards the other components of the unit 3 itself.

The arrangements described enable the remote supply of the visual display unit 3 through the line 4.

The capacitors 32 constitute a branch circuit of low impedance to the pulsed current components 22 and 23.

- 13 -

These signals have, however, a sufficiently wide frequency spectrum to allow their propagation to the other components of the unit 3.

An operational amplifier is indicated 33 the output of which is connected to the point 29 through a resistor 34 which, by virtue of the filtering action effected by the capacitors 32, is in fact traversed solely by the D.C. or "average value" component 20 (measurement signal) of the current flowing in the line 4. The pulsed components 22 and 23 (when transmitted), partially attenuated by the capacitors 32, also flow through the resistance 34. The energy associated with these pulsed components is in effect very small and in fact negligible in comparison with the energy associated with the average value component 20.

Since the primary winding of the transformer 26 in effect constitutes a short circuit for the D.C. signals or signals with slow temporal evolution, the configuration of the connection of the operational amplifier 33 is such that the output of the amplifier 33 itself is coupled so as to transmit voltage to the conductor of the line 16 to which the transformer 26 is connected.

A feedback resistor 35 is connected between the output of the amplifier 33 and the non-inverting input of the

- 14 -

amplifier itself. This non-inverting input is also connected through respective scaling resistors 36 and 37 to the outputs of two threshold comparator circuits 38, 39 the threshold switching levels of which are selectively adjustable by means of the cursors 8 and 9 (Figure 1).

The inverting input of the amplifier 33 is also connected to a further load resistor constituted by a potentiometer 40 the slider of which is connected to the inputs of the comparator elements 38 and 39.

This same slider or tapping point of the potentiometer 40 is connected to one of the terminals of a low-pass filter network or integrating network 41 which acts as an interference suppressor. The other terminal of the network 41 is connected to one of the ends of the winding of an ammeter 42 which controls the movement of the pointer 7 of the indicator module 6. The other end of this winding is connected to the transmission line 4 at the point 30.

The end of the winding of the ammeter 42 connected to the anti-interference network 41 is connected to the input of a differentiator circuit 43 the output of which is connected to two further operational amplifiers 45 and 46 which have feedback diodes 47 and 48 of opposite polarities. The outputs of the operational amplifiers 45 and 46 control two respective LEDs, which constitute

- 15 -

the indicator lights 10a and 10b on the indicator module 6, through supply stages 45a and 46a. Finally a further resistor indicated 49 is interposed between the end of the winding of the ammeter 42 connected to the anti-interference filter network 41 and the earth point 31.

As indicated above, the capacitors 32 constitute open circuits to the average or D.C. component 20 of the current flowing in the line 4. This average or D.C. component thus flows entirely through the resistor 34 to the output of the operational amplifier 33 and then flows to the other conductor of the line 4 after having passed through the winding of the ammeter 42. In other words, the winding of the ammeter is traversed by the substantially D.C. or average component 20 of the current flowing in the line 4. Since the magnitude of this component is proportional to the amplitude of the measurement signal 5, the pointer 7 of the ammeter 42 indicates the value of this measurement signal on the quadrant scale 6.

Across the ends of the resistor 49 (which together with the ammeter 42 acts as a resistive divider for the current passing through the anti-interference network 41) there is thus a voltage drop the value of which is directly proportional to the current flowing in the ammeter 42 and, consequently, the value of the measurement signal. The signal corresponding to the voltage drop across the ends of the resistor 49 is also applied to the input of the differentiator circuit 43 and, through the anti-interference network 41 to the inputs of the comparator circuits 38 and 39. The network 41 in fact behaves simply as a short circuit or as a fixed resistive divider to the substantially D.C. component of the signal.

The two comparator circuits 38 and 39 are thus able to compare a signal indicative of the value of the measurement signal continuously with the threshold levels selected by means of the cursors 8 and 9. When the measurement signal reaches the threshold signal level set on one of the comparator elements 38 or 39, the corresponding element switches over applying a corresponding D.C. voltage signal (positive) to the non-inverting input of the operational amplifier 33.

The connection arrangement of the operational amplifier 33 is such that the equivalent output resistance $R_{out}$ of the amplifier itself, analysed from a dynamic point of view, that is to say, the resistance seen by the current variations which flow from the resistor 34 to the amplifier 33 is in fact negligible. This resistance can in fact be expressed in the form

$$R_{out} = \frac{R_O}{1 + \beta Av} \quad ,$$

where $R_O$ is the typical output resistance of the amplifier (about 70 ohm) Av is the open-network gain of the amplifier (about 50,000) and $\beta$ represents the closed network gain of the amplifier.

In the diagram of Figure 2, the resistors 34, 35 and 40 are selected to have values of the order of 50 ohm, 10 Kohm and 10 Kohm respectively. The closed network gain Av is thus about 2.

Consequently a value of much less than 1 ohm , that is to say a negligible value, is obtained for $R_{out}$.

This means, among other things, that the magnitude of the current (average or substantially D.C. component) flowing through the resistor 34 and through the ammeter 42 is not affected by the voltage value at the output of the operational amplifier 33 and, in general, is not affected by the voltage difference existing between the points 29 and 30. The magnitude of this voltage difference is determined by the level of the signal applied to the non-inverting input of the operational amplifier 33 by the comparator circuits 38 and 39.

In a similar manner, the voltage difference between the points 29 and 30 (that is, the voltage applied to the

0175656·

line 4) is not affected by variations in the average or substantially D.C. component of the current flowing through the ammeter 42.

The pulsed component of the current flowing in the line 4, given by the signals 22 and 23, is not completely short - circuited by the capacitors 32 and flows through the electrical path defined by the resistor 34, the amplifier 33, the potentiometer 40, the anti-interference network 41 (which attenuates it considerably) and the ammeter 42.

However, the amplitude and duration of the signals 22 and 23 – which have a zero average value – is selected so that the energy associated therewith is in fact negligible compared with the energy associated with the average or D.C. component of the current flowing in the line 4. This means, inter alia, that the transmission of the signals 22, 23 by the oscillator 19 has absolutely no effect on the ammeter 42 and on the orientation of the pointer 7. The pulsed component of the current flowing through the line 4 is detected by the differentiator circuit 43 which increases this component. The differentiator circuit 43 is particularly sensitive to rising fronts of the spikes 22 and 23 and distinguishes clearly between the two signals, outputting pulses of opposite polarities according to whether the signal 22 or the signal 23 has been transmitted. The emission of these pulses of opposite polarities causes the stable activation of one of the LEDs 10a or 10b by the respective supply network 45a or 46a. For example, the connection arrangement of the diodes 47 and 48 may be such that when the signal 22 is transmitted, the network 45a activates the LED 10a and, when the signal 23 is transmitted, the supply network 46a activates the LED 10b.

During operation of the instrument, the level of the measurement signal applied to the terminal 5 of the monitoring circuit 2 is presented stably on the indicator module 6. The current generator constituted by the amplifier 11 and the booster 11b in fact makes an electrical current flow through the line 4 with an "average" component (20) of a magnitude proportional to the amplitude of the measurement signal. This average component of the signal flowing through the resistor 34 to the operational amplifier 33 then passes through the winding of the ammeter 42 which controls the movement of the pointer 7.

On the average or substantially D.C. component (20) corresponding to the amplitude of the measurement signal, the current generator 11, 11b superimposes, on the line 4, an alternating electrical current 21 having a zero average value and corresponding to the square wave at 2 KHz generated by the oscillator 18. In the visual display unit 3, this alternating component passes through the network constituted by the primary of the transformer 26 and the capacitors 32. The transformer 26 then takes this alternating current component from the line 4, transferring it to the rectifier 27, the outputs 28 of which supply all the electrical circuits of the visual display unit 3. The visual display unit 3 is thus supplied remotely by the monitoring unit 2.

The voltage drop across the ends of the resistor 49 is proportional to the current flowing through the ammeter 22. This voltage drop, which is thus proportional to the level of the measurement signal is transferred to the input of the comparators 38 and 39. As long as the level of the measurement signal remains below the threshold levels selected by means of the cursors 8 and 9, the outputs of both the comparators 38 and 39 remain at a low logic level. Consequently, the non-inverting input of the operational amplifier 33 is also kept at a correspondingly low level, establishing a D.C. voltage level of the order of 2 volts between the points 29 and 30. This D.C. voltage difference is applied directly to the two conductors of the line 4 and detected, at the opposite end of the line, by the differential circuit 24. The signal output by this element $(V'_4)$ fed to the two-threshold comparator 25, is, under these conditions, at a lower level than the lower threshold $S'_{25}$. Consequently, as long as the measurement signal remains below the lower threshold level imposed by means of the cursors 8 and 9, the actuators $A_1$ and $A_2$, and the oscillator 19 remain de-energised.

It should also be noted that - in dependence on the connection arrangement of the amplifier 33 - as long as the measurement signal remains below the minimum threshold level selected by means of the cursor 8, any fluctuations in this signal do not have any effect on the voltage applied to the line 4.

When the measurement signal reaches the lower threshold level selected by means of the cursor 8, the voltage applied to the input of the comparator 38 causes switching of the comparator 38, its output passing to a high logic level. A corresponding signal is applied to the non-inverting input of the operational amplifier 33 which establishes a voltage level (base) of about 4 volts between the points 29 and 30 and consequently between the conductors of the line 4.

The variation of the voltage in the line 4 thus induced is detected by the differential circuit 24 the output signal of which moves to the level $V''_4$ (Figure 4) exceeding the lower threshold $S'_{25}$ of the circuit 25. Consequently the circuit 25 sends a control signal to the actuator $A_1$ and to the oscillator 19 causing the energisation of the actuator $A_1$ and the output of a spike by the oscillator 19. This spike, applied to the non-inverting input of the amplifier 11, means that a pulsed component having an average value of zero, for example the pulsed signal indicated 22 in Figure 3, is added to the current flowing in the line 4.

This pulsed signal is propagated through the resistor 34, the operational amplifier 33, the potentiometer 40 and the anti-interference network 41 until it reaches the input of the differentiator 43. Upon receipt of this pulsed signal, the differentiator circuit 43 passes a control signal to the supply network 45a causing the stable activation of the LED 10a. The lighting of the LED 10a thus confirms that the relay $A_1$ has been energised effectively to the operator observing the indicator module 6.

The transmission of the pulsed component 22 constitutes the only perturbation in the current flowing in the line 4 resulting from the variation of the voltage level applied to the line itself. As indicated above, the average component of this current is in no way influenced by the voltage difference present between the points 29 and 30, corresponding to the voltage applied to the line. The position of the pointer 7 of the ammeter 42 is thus in no way influenced by the transmission of the signal 22 to the visual display unit 3. As indicated above, the energy associated with the signal 22 in fact has no effect whatsoever on the operation of the ammeter 42.

The operating condition described (relay $A_1$ energised, LED 10a lit) remains until the level of the measurement signal (presented continuously on the indicator module 6) reaches the maximum threshold level set by means of the cursor 9.

Once again it should be stressed that, as long as the measurement signal does not reach this upper threshold level, any fluctuations in the range between the lower threshold level and the upper threshold level do not have any effect on the voltage present on the line 4.

When the upper threshold level is reached, the voltage present at the input of the comparator 39 causes the switching of the comparator itself, the output of which thus changes to a high logic level. Since the output of the comparator is also connected through the scaling resistor 37 to the non-inverting input of the amplifier 33, the voltage present between the points 29 and 30, that is to say, the voltage applied to the line 4, undergoes a further variation, being brought to a level of about 6 volts.

This further variation is detected by the differential circuit 24 the signal 4 output thereby being brought to the level $V"'_4$ of Figure 4, higher than the upper

threshold level $S''_{25}$ of the circuit 25. The circuit 25 then energises the second actuator $A_2$ and causes the output of a pulsed signal (spike) by the oscillator 19 of the opposite polarity from that transmitted previously. The pulsed component 23 of the current flowing in the line 4 corresponds to this pulsed signal in a manner wholly equivalent to that described above with reference to the pulsed current component 22.

In complete analogy to the pulsed component 22, the pulsed component 23 is input to the differentiator 43 which transmits a control signal to the supply network 45b causing the activation of the LED 10b.

The activation of this LED, immediately detectable by the operator who observes the indicator module 6, confirms the fact that the second actuator $A_2$ has been energised effectively due to the measurement signal having reached the maximum threshold level.

Wide possibilities for modification and variation of the circuit diagram described will be obvious to the expert.

For example, instead of the two comparator circuits 38 and 39, a different number of comparator circuits may be used which allow the selective establishment by respective cursors accessible to an operator, of a corresponding number of threshold levels for use as reference levels for the measurement signal so as to cause the energisation or de-energisation of any number of actuator elements when these levels are reached by the measurement signal. Consequently, the number of thresholds of the circuit 25, and the number of different signals which the circuit 19 may generate in order to cause the activation or deactivation of a corresponding number of acoustic or optical warning devices such as the LED 10a and 10b, may be modified.

The indicator instrument described above incorporates a system for the two-way transmission of electrical signals on a single transmission line, the essential components of which are reproduced in Figure 5.

In this Figure, at the ends of the transmission line 4 are two units, such as the monitoring unit 2 and the visual display unit 3, which exchange electrical signals between them through the line 4 itself.

The first unit 2 comprises a current generator such as the amplifier 11 which can cause an electrical current to flow in the line 4 the magnitude of which is indicative of the signals sent from the first unit to the second unit (for example, the measurement signal 20 and the pulsed signals 22 and 23). The second unit 3 comprises a current meter which is able to monitor the magnitude of the current flowing in the line 4 and allows the unit 3 to receive signals from the unit 2. For the transmission of signals in the opposite direction, the second unit 3 has a voltage generator, such as the amplifier 33, which applies a voltage corresponding to the signals transmitted to the unit 2 ($V'_4$, $V''_4$, $V'''_4$) to the line 4. This latter unit is also provided with a voltage meter such as the differential circuit 24 which detects these voltage levels, allowing the first unit 2 to receive signals transmitted thereto by the second unit 3.

0175656

One of the units (monitoring unit 2 in the example illustrated) is also able to send to the other unit an alternating signal (21) having an average value of zero which , separated by means of the transformer 26 from the substantially D.C. component 20 and the pulsed components 22, 23 of the current flowing in the line 4, and subsequently rectified, may be used to supply the other unit. It is no longer necessary to provide an autonomous supply for this latter unit.

From what has been described it may thus be seen that the possibilities of application of such a system for the two-way transmission of electrical signals on a single transmission line are not strictly limited to the indicator instrument described but extend to numerous other fields of application.

Naturally, the principle of the invention remaining the same, constructional details and embodiments may be varied widely with respect to that described and illustrated without thereby departing from the scope of the present invention.

CLAIMS

1. System for the two-way transmission of electrical signals between a first (2) and a second (3) unit connected by a single transmission line (4) which can operate simultaneously to transmit and receive signals, characterised in that:

- the first unit (2) includes a current generator (11, 11b) which can cause an electrical current to flow in the transmission line (4) the magnitude of which is indicative of the signals (20, 22, 23) sent from the first unit (2) to the second unit (3); the first unit (2) further including a voltage meter (24) sensitive to the voltage $(V'_4, V''_4, V'''_4)$, present in the transmission line (4), and

- the second unit (3) includes a voltage generator (33) which can apply an electrical voltage to the transmission line (4) the value of which is indicative of the signals $(V'_4, V''_4, V'''_4)$, sent from the second unit (3) to the first unit (1); the second unit (3) further including a current meter which is sensitive to the current flowing in the transmission line (4).

2. System according to Claim 1, characterised in that one of the units (2) includes a generator (11, 18) which produces an alternating signal (21) with an average value of zero intended to be sent to the other unit (3) and in that the other unit (3) includes a transformer and rectifier circuit (26, 27) which can derive a substantially D.C. signal from the alternating signal (20) which can be used to supply the other unit (3).

3. Indicator instrument including:
- a monitoring unit (2) which, in use, is supplied with a signal to be measured (measurement signal) and which is able to control selectively the operation of at least one actuator element ($A_1$ and $A_2$) and
- a visual display unit (3) for presenting the measurement signal in a visual form, provided with regulating means (8, 9) for selecting at least one threshold level for the measurement signal at which it is desired to change the operating condition of the at least one actuator element ($A_1$, $A_2$)
characterised in that:
- the monitoring unit (2) and the visual display unit (3) are connected together through a transmission line (4)
- the monitoring unit (2) includes a current generator (11, 11b) which in use is supplied with the measurement signal and causes an electrical current to flow in the transmission line (4) with at least one spectral component (20) the magnitude of which is indicative of the values of the measurement signal; the monitoring unit (2) further including a voltage meter (24, 25) which, in use, can detect the value of the voltage present on the transmission line (4) and can control selectively, in the presence of a predetermined variation ($V'_4$, $V''_4$, $V'''_4$) in the said voltage value in the transmission line (4), a corresponding variation in the operating condition of the at least one actuator element ($A_1$, $A_2$) and
- the visual display unit (3) includes a current meter (42) which is sensitive to the at least one spectral component (20) of the current flowing in the transmission line (4); the visual display unit (3) further including threshold comparator elements (38, 39) sensitive to the magnitude of the at least one spectral component and the threshold switching levels of which are selectively determinable by regulating means (8, 9) and at least one voltage generator (33) which is controlled by the threshold comparator elements (38, 39) and causes variations ($V'_4$, $V''_4$, $V'''_4$) in the voltage present in the transmission line (4) upon switching of the comparator elements (38, 39).

4. Indicator instrument according to Claim 3, characterised in that:
- the monitoring unit includes a supply oscillator (18) which can generate an alternating signal with a zero average value the frequency spectrum of which occupies a substantially discontinuous frequency band of the range of frequencies occupied by the frequency spectrum of the said at least one spectral component (20) corresponding to the measurement signal: the alternating signal with zero average value being supplied to the current generator (11, 11b) superposed on the measurement signal, whereby the current flowing in the transmission line (4) includes at least two distinct spectral components (20, 21) corresponding respectively to the measurement signal and to the said alternating signal produced by the supply generator (18), and
- the visual display unit (3) includes a transformer and rectifying circuit (26, 27) which is associated with the current meter (42) and can extract from the current flowing in the transmission line (4) the spectral component (21) corresponding to the said alternating signal and which can generate therefrom a substantially D.C. electrical signal usable for the supply of the visual display unit (3).

5. Indicator instrument according to Claim 3, characterised in that:
- the monitoring unit (2) includes an auxiliary oscillator (19) which is connected to the voltage meter (24, 25) and can generate, when the voltage meter (24, 25) controls predetermined variations in the operating conditions of the at least one actuator element ($A_1$, $A_2$), corresponding pulsed signals with a zero average value, each of which is indicative of a corresponding operating condition of the at least one actuator element ($A_1$, $A_2$); the pulsed signals with zero average value being supplied to the current generator (11, 16) superposed on the measurement signal, whereby the current flowing in the transmission line (4) includes pulsed components (22, 23) correspnding to the respective signals generated by the auxiliary oscillator (18) and

- the visual display unit (3) includes a separator circuit carrying associated warning elements (10a, 10b) which is sensitive to the pulsed components (22, 23) of th current flowing in the transmission line (4) and in the presence of a predetermined pulsed component (22, 23) of the said current, can cause the activation of a corresponding warning element (10a, 10b).

6. Indicator instrument according to Claim 5, characterised in that the auxiliary oscillator (19) generates pairs of pulsed signals with a zero average value, each pair including two substantially identical signals in antiphase with each other, intended to be generated in selective alternation with each other to cause the presence of corresponding pulsed current components in the transmission line (4) and in that the display unit (3) includes, for each pair of pulsed antiphase signals , a differentiator element (43) sensitive to the pulsed components of the current flowing in the transmission line (4) and which, in dependence on the phase of the pulsed component (22, 23) present in the transmission line (4), can activate a respective warning element (10a, 10b).

7. Indicator instrument according to any one of Claims 3 to 6, characterised in that:
- the voltage generator of the visual display unit (3) includes an operational amplifier (33), the output of which in use is coupled so as to transmit voltage to the transmission line (4) and defines a flow path for the at least one spectral component (20) the strength of which is indicative of the values of the measurement signal; the outputs of the threshold comparator elements (38, 39) being connected, in a generally sum configuration, to the non-inverting input of the operational amplifier (33), whereby the operational amplifier (33) can apply differentiated voltage levels $(V'_4, V''_4, V'''_4)$ to the transmission line (4), these constituting linear combinations of the signals output by the comparator elements (38, 39).

8. Indicator instrument according to any one of Claims 3 to 7, characterised in that the voltage meter of the monitoring unit (2) includes a threshold comparator circuit (25) which can discriminate between the different voltage levels $(V'_4, V''_4, V'''_4)$ present on the transmission line (4).

The whole substantially as described and illustrated and for the purposes specified.

FIG. 1  1/3

FIG. 5

FIG_2

# FIG. 3.

# FIG. 4